# EUROPEAN PATENT APPLICATION

(11) **EP 4 664 911 A1**
(43) Date of publication of application: **17.12.2025**
(21) Application number: 25181709.4
(22) Date of filing: 10.06.2025
(51) Int. Cl.: H04N 23/60, H04N 23/617, H04N 23/661, H04N 23/667, H04N 1/00

(54) **SHOOTING APPARATUS, INFORMATION PROCESSING APPARATUS, TERMINAL APPARATUS, CONTROL METHOD, AND COMPUTER PROGRAM**

(30) Priority: 11.06.2024 JP 2024094506
(71) Applicant: CANON KABUSHIKI KAISHA, Tokyo 146-8501 (JP)
(72) Inventor: SASAKI, Osamu, Tokyo,, 146-8501 (JP)
(74) Representative: TBK

(57) **Abstract**

A shooting apparatus (101) specifies, based on reading of a predetermined printed material including at least a predetermined image obtained through shooting performed by another shooting apparatus, an access destination associated with an information processing apparatus (111) to be accessed to obtain predetermined setting information associated with a setting used by the other shooting apparatus in the shooting, obtains the predetermined setting information through communication with the information processing apparatus (111) via the access destination; and sets the shooting apparatus (101) with use of the predetermined setting information.

## Description

### TECHNICAL FIELD

The present disclosure relates to a technique to streamline setting of a shooting apparatus.

### BACKGROUND

A shooting apparatus, such as a digital camera, can shoot different images of the same subject by adjusting each of setting values of a shooting function used during shooting. Examples of setting items of the shooting function are a shutter speed, an f-number, color appearance, color tones, an ISO sensitivity, white balance, color balance, sharpness, and the like, and two or more possible setting values can be provided for each setting item. ISO is an acronym for International Organization for Standardization. Setting values may be analog continuous values, or may be digital discrete values.

In general, an advanced user who is familiar with handling of a shooting apparatus can shoot images that the user wishes to obtain by making full use of these various settings. On the other hand, an inexperienced user who is not familiar with handling of a shooting apparatus may not be able to shoot images that the user wishes to obtain because the user cannot make full use of these various settings. For example, in a case where there are a large number of usable setting items and settable setting values during shooting, while an obtained image varies depending on a combination thereof, it may be difficult to find an appropriate combination for shooting images that a user wishes to obtain.

For example, assume a case where a user has seen a photograph of a poster of a waterfall that is put out at, for example, a tourist site or a photograph published in a travel pamphlet, and wishes to shoot a similar photograph. At this time, the user can shoot a photograph that resembles the photograph of the poster or the pamphlet by shooting a subject from the same angle of view in a place where the subject was actually shot. However, in a case where the setting values used to set the shooting apparatus are different from those used when shooting the photograph of the poster or the pamphlet, the photograph shot by the user can be different from the photograph of the poster or the pamphlet. On some shooting apparatuses, combinations of predetermined setting values associated with shooting modes are preset and provided. Such preset combinations of setting values are selected in accordance with a subject shot by a user or a situation where the shooting is performed; consequently, settings of a shooting apparatus could possibly be switched. However, the preset combinations of setting values are limited, and do not necessarily match the combination of setting values used when shooting the photograph of the poster or the pamphlet. In a case where there are a large number of combinations of setting items usable by a user and setting values settable by a user on a shooting apparatus as describe above, it may not be easy for certain users to specify a combination for shooting images that the user wishes to obtain. Regarding this, for example, Japanese Patent Laid-Open No. 2006-174043 describes a technique to provide, for example, a combination of setting values used when shooting a photograph published in a poster or a pamphlet with use of a two-dimensional barcode and the like.

In a case where a combination of setting values of a shooting apparatus that were used in shooting of an image on a printed material, such as a poster and a pamphlet, is provided with use of a two-dimensional code and the like, such a two-dimensional code and the like can be printed and provided on this printed material together with this image. For example, information that can specify each of the setting values of the shooting apparatus can be provided by being embedded in the two-dimensional code. In this case, a user can set specified parameters on a shooting apparatus to be set by reading this two-dimensional code with use of this shooting apparatus. This makes it possible for the user to set the setting values used in shooting of this image on the shooting apparatus without finding the setting values through trial and error. However, in a case where a change or an addition has been made to these setting values, it becomes necessary to re-print the printed material to change the two-dimensional code and the like printed on the printed material.

### SUMMARY

The present disclosure provides a technique that can provide a user with setting values of settings of a shooting apparatus that have been associated with an image printed on a printed material without requiring re-printing of the printed material even in a case where an addition or a change has been made to these setting values.

The present disclosure in its first aspect provides a shooting apparatus as specified in claim 1. Optional features are specified in claims 2 to 8.

The present disclosure in its second aspect provides an information processing apparatus as specified in claim 9.

The present disclosure in its third aspect provides a terminal apparatus as specified in claim 10.

The present disclosure in its forth aspect provides a control method executed by a shooting apparatus as specified in claim 11.

The present disclosure in its fifth aspect provides a control method as specified in claims 11 to 13.

The present disclosure in its sixth aspect provides a program as specified in claims 14 to 16.

Features of the present disclosure will become apparent from the following description of embodiments with reference to the attached drawings. The following description of embodiments are described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a diagram showing an exemplary configuration of an information processing system.
FIG. 2 is a diagram showing an exemplary hardware configuration of a shooting apparatus and a terminal apparatus.
FIG. 3 is a diagram showing an exemplary hardware configuration of an information processing apparatus.
FIG. 4 is a diagram showing an exemplary functional configuration of the shooting apparatus.
FIG. 5 is a diagram showing an exemplary functional configuration of the information processing apparatus.
FIG. 6 is a diagram showing an exemplary configuration of a printed material.
FIG. 7 is a diagram showing an example of a sequence of messages exchanged between apparatuses.
FIG. 8 is a diagram showing an example of a processing flow executed by the shooting apparatus.
FIG. 9 is a diagram showing an example of a processing flow executed by the information processing apparatus.
FIG. 10A is a diagram showing an example of a URI.
FIG. 10B is a diagram showing an example of a message of which the information processing apparatus is notified by the shooting apparatus.
FIG. 11 is a diagram showing an example of setting information held in the information processing apparatus.
FIG. 12 is a diagram showing an exemplary configuration of an information processing system.
FIG. 13 is a diagram showing an exemplary functional configuration of the terminal apparatus.
FIG. 14A is a diagram showing an exemplary operation of the terminal apparatus.
FIG. 14B is a diagram showing an exemplary operation of the terminal apparatus.
FIG. 15 is a diagram showing an example of a sequence of messages exchanged among apparatuses.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### (System Configuration)

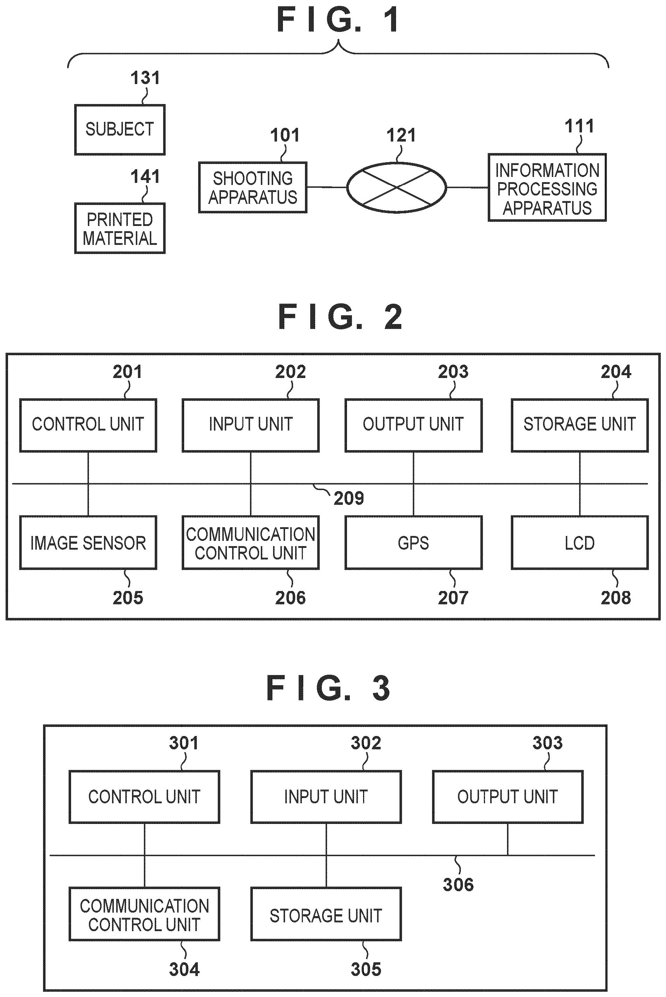

FIG. 1 shows an exemplary configuration of an information processing system according to the present embodiment. The information processing system can be composed of a shooting apparatus 101 and an information processing apparatus 111. The shooting apparatus 101 and the information processing apparatus 111 are connected via a network 121 and can communicate with each other. The network 121 may be a combination of a general public mobile communication network and the Internet, and may be a wireless local area network (LAN), a wired LAN, a landline telephone network, and the like. Furthermore, a combination of more than one of these networks can be used. Note that although FIG. 1 shows a configuration in which one shooting apparatus 101 and one information processing apparatus 111 exist as an example, a plurality of shooting apparatuses 101 and a plurality of information processing apparatuses 111 may exist.

The shooting apparatus 101 is an apparatus capable of shooting images. For example, the shooting apparatus 101 can be a digital camera, a digital video camera, and the like. The shooting apparatus 101 is not limited to these, and can be any apparatus having a shooting function, such as a mobile telephone with a camera function, a smartphone with a camera function, a tablet with a camera function, a personal computer (PC) with a camera function, and the like.

The information processing apparatus 111 is a server apparatus that provides various services to the shooting apparatus 101. For example, the information processing apparatus 111 can provide a service that receives data pieces of images shot by the shooting apparatus 101 from the shooting apparatus 101 and accumulates such data pieces. Furthermore, the information processing apparatus 111 can provide a service that transmits data pieces accumulated therein to the shooting apparatus 101 or another apparatus in response to a user's request. A service provided by the information processing apparatus 111 is not limited to these; any service that can be utilized by the user to use the shooting apparatus 101 can be provided.

A subject 131 is a target to be shot by the user with use of the shooting apparatus 101. For example, the subject 131 can be a natural scenery, a flower, an insect, an animal, a person, a building, a train, an aircraft, and the like. The subject 131 is not limited to these, and can be any target to be shot by the user with use of the shooting apparatus 101.

A printed material 141 is a printed material on which an image obtained through shooting of the subject 131 has been printed. For example, the printed material 141 can be a poster or a pamphlet. The printed material 141 is not limited to these, and can be any medium on which images can be published or posted, such as paper and a billboard.

In a case where the user shoots the subject 131 with use of the shooting apparatus 101, the user can shoot various images that are different from one another, even if the same subject 131 is shot, by changing setting values of various setting items for shooting that are included in the shooting apparatus 101. Setting values can also be referred to as parameters. For example, an f-number, a shutter speed, an ISO sensitivity, and the like can be set on the shooting apparatus 101 to adjust the brightness of images. The f-number can adjust the amount of light passing through a lens. The shutter speed can adjust a time period for which a sensor or a film is exposed to light. The ISO sensitivity can adjust the sensitivity at which the sensor reacts to light. Note that ISO is an acronym for International Organization for Standardization. As one example, the shutter speed can be set to be high when shooting a fast-moving subject, whereas the shutter speed can be set to be low when shooting in a dark place. As one example, the f-number can be set to be small during, for example, shooting at night or indoors with a poor lighting environment, whereas the f-number can be set to be large during, for example, shooting in which the entirety is brought into focus, such as shooting of a scenery. These settings influence one another; thus, if a combination of respective setting values is not set appropriately, an image that the user wishes to obtain may not be shot. For example, if the shutter speed is set to be high and the ISO sensitivity is set to be low in a case where the f-number is set to be large, an image may become dark, and a subject may not be captured appropriately. Also, for example, white balance and color balance can be adjusted on the shooting apparatus 101 to adjust color appearance and color tones of images. Furthermore, for example, sharpness can be adjusted on the shooting apparatus 101 to enhance or obscure an outline of a subject. The setting items for shooting that are included in the shooting apparatus 101 are not limited to these, and any setting item for shooting may be provided; respective setting items can each be set at an appropriate setting value in accordance with an image that the user wishes to obtain.

For example, in a case where the user wishes to shoot an image similar to the image printed on the printed material 141, it is necessary to reproduce the same situation as when this image was shot. For example, in a case where the image is an image of a scenery, in a place where the image printed on the printed material 141 was shot, the user adjusts the distance and angle between the shooting apparatus 101 and the subject 131 so as to achieve the angle of view at which the image was shot, and configures settings that are the same as settings used in shooting on the shooting apparatus 101. Here, as stated earlier, there are a variety of setting items that can be used for shooting in setting the shooting apparatus 101, and respective setting items influence one another. For this reason, it is difficult for a user who is not familiar with handling of the shooting apparatus 101 to specify a combination of setting values that were used when shooting the image printed on the printed material 141 through trial and error. Regarding this, for example, providing setting values that were used when shooting the image on the printed material 141 enables the user to set the shooting apparatus 101 with use of these setting values. For example, information indicating the setting values that were used when shooting the image can be provided as a two-dimensional code. In this case, the user can obtain the setting values that were used when shooting the image by reading this two-dimensional code with use of the shooting apparatus 101 and analyzing the read two-dimensional code. Then, these setting values can be set on the shooting apparatus 101. For example, the two-dimensional code can be a QR code^{®}. In this case, when the shooting apparatus 101 has a function of a QR code reader, the QR code read on the printed material 141 can be analyzed, the setting values that were used when shooting the image can be obtained, and setting of the shooting apparatus 101 can be performed using these setting values. Furthermore, other setting values may be generated based on the setting values that were used when shooting the image printed on the printed material 141, and these setting values may be provided by the two-dimensional code. For example, in a case where there are a plurality of models of the shooting apparatus 101, setting values that correspond to each of these models can be generated and provided as two-dimensional codes. When the setting values that were used in shooting, or setting values generated based on these setting values, are provided together with the image in the foregoing manner, the user can easily reproduce the same situation as when this image was shot and perform shooting. However, according to the foregoing method, in a case where the need to change the two-dimensional code arises after printing the printed material 141, the printed material 141 needs to be re-printed. For example, in a case where a new model has been manufactured and released for sale after printing the printed material 141, the printed material 141 needs to be newly re-printed to provide a combination of setting values corresponding to this model. On the other hand, in a case where the printed material 141 does not provide a combination of setting values corresponding to the new model, a user who uses the new model has to find a combination of parameters through trial and error.

In view of the foregoing circumstance, the shooting apparatus 101 according to the present embodiment specifies an access destination for obtaining predetermined setting information on the basis of reading of a predetermined printed material including a predetermined image, and obtains the predetermined setting information by communicating with an information processing apparatus via this access destination. Then, the shooting apparatus 101 performs setting of itself with use of the obtained setting information. The predetermined setting information is setting information associated with settings used in shooting that was performed using another shooting apparatus to obtain the predetermined image. For example, the predetermined setting information can be setting values that were used in this shooting, or setting values for another model that were generated based on these setting values. Furthermore, the access destination is an access destination associated with the information processing apparatus. For example, the access destination can be indicated by a uniform resource identifier (URI). According to the foregoing configuration, even if an addition or a change has been made to setting information, the updated setting information can be provided to the shooting apparatus 101 by making an addition or a change to setting information held in the information processing apparatus without re-printing the printed material.

For example, first information printed on the predetermined printed material separately from the predetermined image can be provided. In this case, the shooting apparatus 101 can read this first information, and specify the access destination with use of the read first information. The first information can be, for example, a QR code. With the foregoing configuration, the shooting apparatus 101 can access the information processing apparatus on the basis of information of the access destination included in the QR code, and obtain setting information.

For example, second information for specifying the access destination may be embedded in the predetermined image printed on the predetermined printed material. In this case, the shooting apparatus 101 can read the second information embedded in the predetermined image, access the information processing apparatus on the basis of information of the access destination indicated by the second information, and obtain setting information. Note that reading of the second information may be executed by another terminal apparatus. In this case, the shooting apparatus 101 can access the information processing apparatus on the basis of information of the access destination and obtain setting information by obtaining the access destination specified by the second information read by the terminal apparatus.

The following describes apparatus configurations, functional configurations, and processing flows of the shooting apparatus 101 and the information processing apparatus 111 according to the present embodiment.

### (Apparatus Configurations)

FIG. 2 shows an exemplary hardware configuration of the shooting apparatus 101 according to the present embodiment. The shooting apparatus 101 includes a control unit 201, an input unit 202, an output unit 203, a storage unit 204, an image sensor 205, a communication control unit 206, a GPS 207, and an LCD 208. GPS is an acronym for Global Positioning System. LCD is an acronym for Liquid Crystal Display. In FIG. 2, the control unit 201 includes a CPU, a ROM, a RAM, a timer, peripheral devices, and the like, and controls the entirety of the shooting apparatus 101. CPU is an acronym for Central Processing Unit. ROM is an acronym for Read Only Memory. RAM is an acronym for Random Access Memory. The input unit 202 includes such user interfaces as a touch panel, buttons, and dials, and accepts instructions and various types of inputs, including inputs of setting values, from a user to the shooting apparatus 101. The output unit 203 includes an interface for performing output with use of the LCD 208, and provides the user with such outputs as shot images, and a state and a processing result of the shooting apparatus 101. The output unit 203 can provide the user with such outputs as setting items that can be set, setting values that are currently set, and setting values that can be set on the shooting apparatus 101 in setting the shooting apparatus 101. The storage unit 204 can be composed of an interface that controls an access to a flash memory, and the flash memory. The image sensor 205 converts light that has passed through the lens and has been received by an image capturing element into electrical signals, and further converts the electrical signals into image data. The communication control unit 206 includes a communication interface intended for the shooting apparatus 101 to communicate with the network 121, and executes control on communication when the shooting apparatus 101 communicates with another apparatus, such as the information processing apparatus 111, via the network 121. Examples of the communication interface can include, but are not limited to, a wireless LAN, a fifth-generation mobile communication system (5G), and the like. For example, the communication interface can include Bluetooth^{®}, near field communication (NFC), and the like. The GPS 207 measures a current position of the shooting apparatus 101 on earth with use of a satellite positioning system, and records the same as attribute information of shot image data. The LCD 208 displays information output from the output unit 203 for the user. Also, a system bus 209 connects the respective components described above so that they can communicate with one another.

FIG. 3 shows an exemplary hardware configuration of the information processing apparatus 111 according to the present embodiment. The information processing apparatus 111 includes a control unit 301, an input unit 302, an output unit 303, a communication control unit 304, and a storage unit 305. The control unit 301 includes a CPU, a ROM, a RAM, peripheral devices, and the like, and controls the entirety of the information processing apparatus 111. The input unit 302 includes an interface for connecting a keyboard, a mouse, and the like, and accepts instructions and various types of inputs from the user to the information processing apparatus 111. The output unit 303 includes an interface for connecting a display and the like, and controls such outputs as a state and a processing result of the information processing apparatus 111. The communication control unit 304 includes an interface for communicating with the network 121, and controls communication with another apparatus via the network 121. The storage unit 305 includes an interface that controls an access to a large-capacity storage apparatus. Also, a system bus 306 connects the respective components described above so that they can communicate with one another.

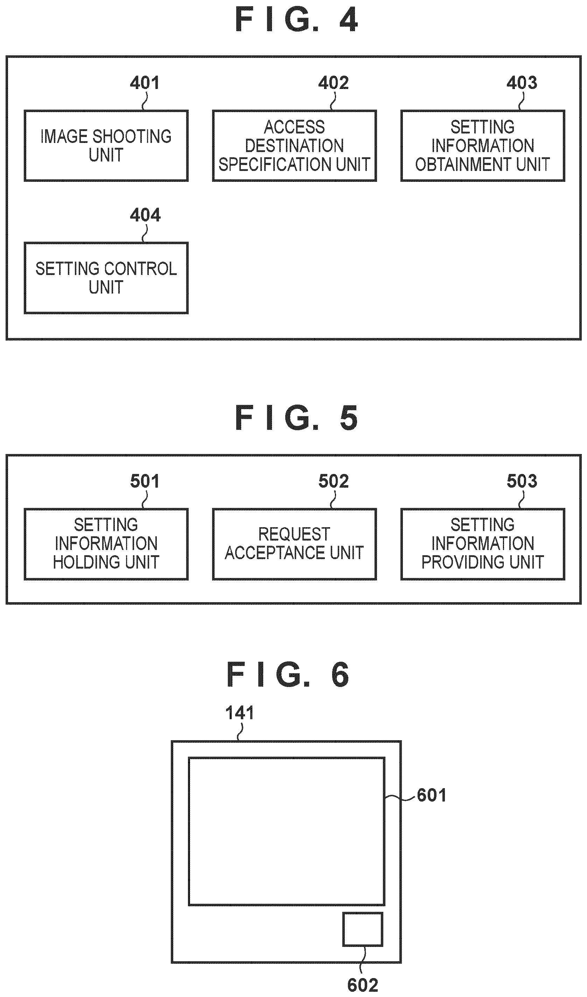

FIG. 4 shows an exemplary functional configuration of the shooting apparatus 101 according to the present embodiment. The shooting apparatus 101 can be configured to include an image shooting unit 401, an access destination specification unit 402, a setting information obtainment unit 403, and a setting control unit 404. The image shooting unit 401 shoots images with use of the image sensor 205. The image shooting unit 401 includes various setting items, and setting values of the respective setting items are set by the setting control unit 404. The image shooting unit 401 obtains images by performing shooting on the basis of the setting values that have been set. The access destination specification unit 402 specifies an access destination to be accessed to obtain setting information for performing setting of the image shooting unit 401. For example, the access destination specification unit 402 can specify the access destination by analyzing an image read by the image shooting unit 401. The setting information obtainment unit 403 obtains setting information. For example, the setting information obtainment unit 403 obtains setting information by communicating with the information processing apparatus 111 with use of the communication control unit 304 via the access destination specified by the access destination specification unit 402. The setting control unit 404 performs setting of the image shooting unit 401. For example, the setting control unit 404 executes setting of the image shooting unit 401 with use of setting information obtained by the setting information obtainment unit 403.

FIG. 5 shows an exemplary functional configuration of the information processing apparatus 111 according to the present embodiment. The information processing apparatus 111 can be configured to include a setting information holding unit 501, a request acceptance unit 502, and a setting information providing unit 503. The setting information holding unit 501 holds setting information of the shooting apparatus. For example, the setting information holding unit 501 can hold information associated with setting information of the shooting apparatus that was used in shooting of a predetermined image. As one example, the setting information holding unit 501 can hold setting information pieces that respectively correspond to different combinations of a predetermined image and a model of the shooting apparatus. The request acceptance unit 502 accepts a request for provision of setting information. The request acceptance unit 502 can accept a request from the shooting apparatus 101 or another apparatus, for example. The setting information providing unit 503 provides setting information. For example, the setting information providing unit 503 can provide setting information in response to a request for provision of setting information accepted by the request acceptance unit 502. In a case where the setting information providing unit 503 has obtained information that specifies a combination of a predetermined image and a model through a request, it can provide setting information corresponding to a combination of these.

FIG. 6 shows an exemplary configuration of the printed material 141 according to the present embodiment. The printed material 141 can be configured to include an image 601 obtained by shooting the subject 131, and a two-dimensional code 602. The printed material 141 may include components other than these; for example, it can include an explanation related to the subject 131 and the like. Also, the printed material 141 may include a plurality of images 601; in this case, it can include two-dimensional codes 602 that respectively correspond to the plurality of images 601. For example, the printed material 141 can include a plurality of images 601 that have been obtained respectively by shooting a plurality of subjects 131 that are different from one another. Furthermore, there may be two or more two-dimensional codes 602 corresponding to one image 601. For example, with respect to one image 601, the printed material 141 can include two or more two-dimensional codes 602 that respectively correspond to models of one or more shooting apparatuses 101. The two-dimensional code 602 can include information indicating an access destination to be accessed to obtain predetermined setting information associated with setting values used in shooting of the subject 131 in the image 601. The information indicating the access destination can be, for example, a URI. The URI can be an identifier for uniquely recognizing each file existing in the network 121. The URI can include, for example, a uniform resource locator (URL) or a uniform resource name (URN). The predetermined setting information may be setting values used in shooting of the subject 131 in the image 601, or may be other setting values generated based on these setting values. For example, setting information can be setting values which are for obtaining an image similar to the image 601 with use of a model different from the shooting apparatus used in shooting, and which are for this model. The two-dimensional code 602 is, for example, a QR code. The two-dimensional code 602 is not limited to this, and can be replaced with any information that can include information indicating the access destination to be accessed to obtain predetermined setting information of the image 601. For example, a one-dimensional code or character information indicating the URI may be used in place of the two-dimensional code. The two-dimensional code 602 may be arranged on the image 601 in such a manner that it is integrated with the image 601. Furthermore, in place of the two-dimensional code 602, information indicating the access destination to be accessed to obtain the predetermined setting information may be embedded in the image 601. For example, the information indicating the access destination to be accessed to obtain the predetermined setting information can be embedded as an electronic watermark in the image 601.

### (Flow of Processing)

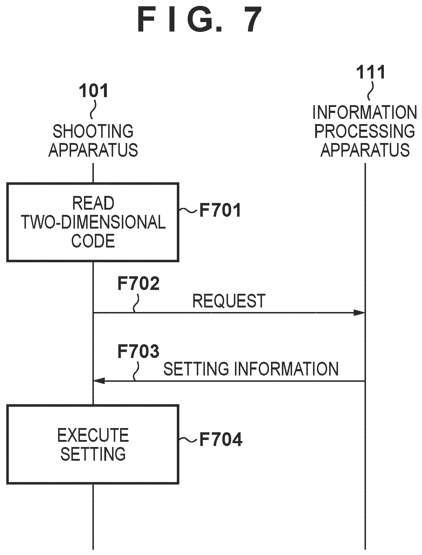

A description is now given of a flow of processing that is executed by the shooting apparatus 101 and the information processing apparatus 111 in order for the shooting apparatus 101 to obtain setting information. FIG. 7 shows an example of a sequence of messages that are exchanged between the shooting apparatus 101 and the information processing apparatus 111 according to the present embodiment in order for the shooting apparatus 101 to obtain setting information. This sequence can be started by, for example, turning ON a power source of the shooting apparatus 101 and pointing the shooting apparatus 101 at the printed material 141. Upon detecting that the two-dimensional code 602 has been printed on the printed material 141, the shooting apparatus 101 reads this two-dimensional code (F701). For example, in a case where the two-dimensional code 602 is a QR code, the shooting apparatus 101 can detect the two-dimensional code 602 on the basis of existence of predetermined finder patterns on the printed material 141. For example, the shooting apparatus 101 can display the detection of the two-dimensional code on the LCD 208, and accept a user input as to whether the information processing apparatus 111 is to be accessed. In this way, the shooting apparatus 101 can access the information processing apparatus 111 on the basis of reading of the detected two-dimensional code 602.

The shooting apparatus 101 accesses the information processing apparatus 111 via an access destination that has been specified based on the two-dimensional code 602. For example, the shooting apparatus 101 can access the information processing apparatus 111 by accessing a URI indicated by the two-dimensional code 602. When accessing the information processing apparatus 111, the shooting apparatus 101 can request provision of setting information (F702). The information processing apparatus 111 can provide setting information to the shooting apparatus 101 on the basis of reception of the request for provision of setting information from the shooting apparatus 101 (F703).

Upon receiving setting information from the information processing apparatus 111, the shooting apparatus 101 can perform setting of itself with use of this setting information (F704). The shooting apparatus 101 can notify a user upon completion of setting of itself. For example, the shooting apparatus 101 can display the completion of setting of itself on the LCD 208.

The access destination may vary with each model of the shooting apparatus 101. For example, the information processing apparatus 111 can hold setting information pieces that respectively correspond to the models of the shooting apparatus 101. Also, in a case where a plurality of different access destinations are provided respectively in correspondence with the models of the shooting apparatus, the information processing apparatus 111 can accept a request for provision of setting information via the access destinations corresponding to the respective models. In this case, the two-dimensional code 602 can include information pieces indicating the access destinations corresponding to the respective models. The shooting apparatus 101 can select information indicating the access destination corresponding to the model of itself from among the information pieces indicating the plurality of access destinations included in the read two-dimensional code 602, and request the information processing apparatus 111 to provide setting information via this access destination. In a case where different two-dimensional codes 602 are provided for different models, the shooting apparatus 101 can select the access destination corresponding to the model of itself by reading the two-dimensional code 602 corresponding to this model. The information processing apparatus 111 can determine to which model the setting information to be provided corresponds by specifying the access destination via which the request has been accepted. On the other hand, in a case where a common access destination is provided for a plurality of models of the shooting apparatus, the shooting apparatus 101 can request the information processing apparatus 111 to provide setting information via this access destination regardless of the model of itself. In this case, the shooting apparatus 101 can notify the information processing apparatus 111 of information that specifies the model of itself. For example, the shooting apparatus 101 can make notification by including the information that specifies the model of itself in a message that requests setting information. The information processing apparatus 111 can provide the shooting apparatus 101 with setting information corresponding to the model of which it has been notified.

The access destination may vary with each image 601 printed on the printed material 141. For example, the information processing apparatus 111 can hold setting information pieces that respectively correspond to the images 601. Also, in a case where different access destinations are provided respectively in correspondence with the plurality of images 601, the information processing apparatus 111 can accept a request for provision of setting information via each access destination. In this case, the two-dimensional code 602 can include information pieces indicating the access destinations corresponding to the respective images 601. The shooting apparatus 101 can request the information processing apparatus 111 to provide setting information via the access destination indicated by the read two-dimensional code 602. The information processing apparatus 111 can determine to which image 601 the setting information to be provided upon request corresponds by specifying the access destination via which the request has been accepted. On the other hand, in a case where a common access destination is provided for the plurality of images 601, the shooting apparatus 101 can request the information processing apparatus 111 to provide setting information via this access destination. In this case, the shooting apparatus 101 can notify the information processing apparatus 111 of specification information that specifies an image 601. The information processing apparatus 111 can provide the shooting apparatus 101 with setting information corresponding to the image 601 specified by the specification information of which it has been notified. The specification information that specifies the image 601 can be, for example, identification information that uniquely identifies the image 601. The specification information that specifies the image 601 can be included in the two-dimensional code 602. For example, the shooting apparatus 101 can make notification by including the specification information that specifies the image 601 in a message that requests setting information. Note that the setting information pieces of the respective models can be generated based on setting information of the model used in shooting. For example, in a case where a specific setting item included in a specific model exists also in the model used in shooting, setting values that are the same as those of the model used in shooting can be used for this specific setting item. In a case where the specific setting item included in the specific model does not exist in the model used in shooting, a default value set on this specific model can be used for this specific setting item.

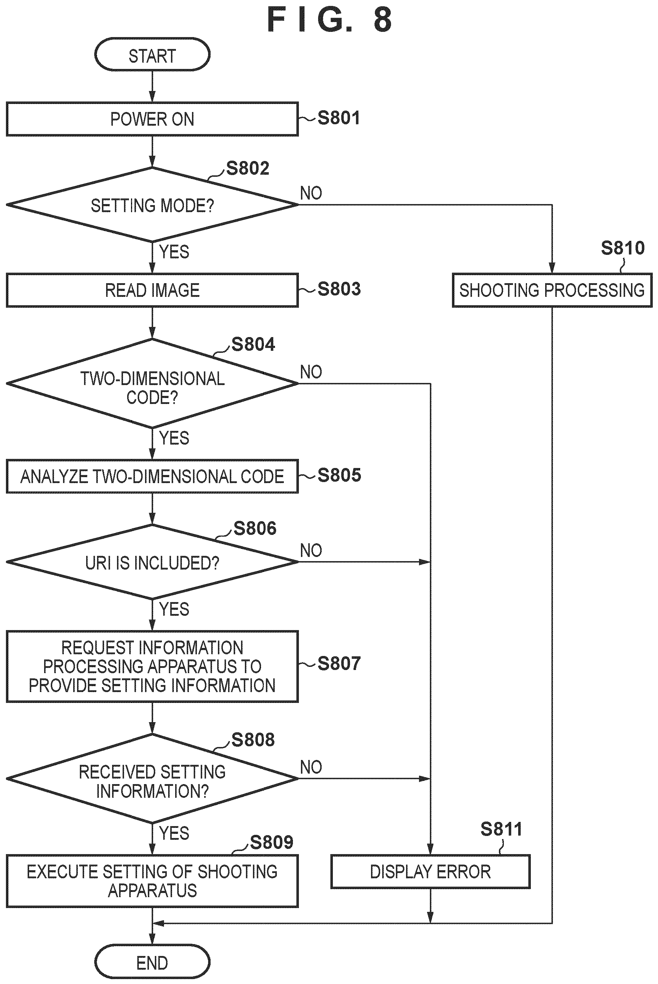

A description is now given of a flow of processing that is executed by the shooting apparatus 101 to obtain setting information. FIG. 8 shows an example of a processing flow executed by the shooting apparatus 101 according to the present embodiment. The present flow can be started when the power source of the shooting apparatus 101 has been placed in an ON state (step S801). When the power source of the shooting apparatus 101 has been placed in the ON state, the shooting apparatus 101 determines an operation mode of itself, and executes an operation corresponding to this operation mode (step S802). For example, based on an input from a user, the shooting apparatus 101 can change in which operation mode it is to operate among a plurality of operation modes included therein. The plurality of operation modes can include a setting mode, a still image shooting mode, a moving image shooting mode, and the like. The setting mode can be an operation state in which setting of the shooting apparatus 101 is performed. The still image shooting mode can be an operation state in which a still image is shot. The moving image shooting mode can be an operation state in which moving images are shot. The operation modes (operation states) in which the shooting apparatus 101 can be placed are not limited to these, and can include other operation modes. For example, each of the still image shooting mode and the moving image shooting mode can be further subdivided into a plurality of shooting modes. The shooting apparatus 101 can include preset setting values that correspond to each shooting mode. In a case where the shooting apparatus 101 is not in the setting mode (NO of step S802), it executes an operation corresponding to an operation mode of itself. For example, in a case where the shooting apparatus 101 is in the still image shooting mode or the moving image shooting mode, it executes shooting processing (step S810). In this case, the shooting apparatus 101 can be in a standby state until a user operation is input, and shoot a subject in response to a user operation.

In a case where the shooting apparatus 101 is in the setting mode (YES of step S802), it can read an image and the like on the printed material (step S803). For example, the shooting apparatus 101 can include a plurality of setting modes, such as a setting mode that accepts settings that are manually made by the user, and a setting mode in which setting is performed based on image reading. Below, the setting mode in which setting is performed based on image reading will be described. For example, the shooting apparatus 101 reads an image input via the image sensor 205. The shooting apparatus 101 determines whether the read image includes, for example, the two-dimensional code 602 (step S804). In a case where the read image includes the two-dimensional code 602 (YES of step S804), the shooting apparatus 101 analyzes this two-dimensional code 602 (step S805). For example, in a case where the two-dimensional code 602 is a QR code and the shooting apparatus 101 has a function of a QR code reader, the shooting apparatus 101 can extract, through analysis using the function of the QR code reader, information included in the QR code that has been detected by way of image reading. On the other hand, in a case where the read image does not include the two-dimensional code 602 (NO of step S804), the shooting apparatus 101 can display an error (step S811). For example, the shooting apparatus 101 can display the fact that the two-dimensional code 602 has not been detected on the LCD 208.

Regarding the result of analysis on the two-dimensional code 602, the shooting apparatus 101 determines whether a URI indicating an access destination for obtaining setting information is included (step S806). For example, in a case where a QR code has been detected by way of image reading, the shooting apparatus 101 can extract information of a URI and the like included in this QR code, provide the user with the obtained information of the URI and the like by outputting the same to the LCD 208, and request a user input. Based on acceptance of a user input indicating that this URI is to be accessed, the shooting apparatus 101 can continue processing while assuming that this URI is the access destination for obtaining setting information. Note that in a case where the shooting apparatus 101 has detected a QR code by way of image reading and extracted the information included in this QR code, it may access the obtained URI without waiting for a user input. This can spare the user the trouble of performing an operation. On the other hand, in a case where the two-dimensional code 602 does not include information of a URI and the like (NO of step S806), the shooting apparatus 101 can display an error (step S811). For example, the shooting apparatus 101 can display the fact that a valid URI has not been extracted from the two-dimensional code 602 on the LCD 208. Note that the shooting apparatus 101 may detect and analyze the two-dimensional code 602 and intermittently provide extracted information to the user until the operation mode is switched. In this case, an error may not be displayed.

The shooting apparatus 101 can request the information processing apparatus 111 to provide setting information via the specified URI (step S807). At this time, the shooting apparatus 101 can provide the information processing apparatus 111 with information that specifies the model of itself, and information that specifies an image 601. For example, the shooting apparatus 101 can provide the information processing apparatus 111 with information that can specify the model of itself, such as a manufacturing number and a model number. The information that can specify the model of the shooting apparatus 101 can be held in the storage unit 204 of the shooting apparatus 101. Furthermore, in a case where the read two-dimensional code 602 includes information that can specify an image 601, the shooting apparatus 101 can provide this information to the information processing apparatus 111. Note that in a case where respective images 601 are assigned different URIs for obtaining setting information, when the shooting apparatus 101 has accessed a URI, an image 601 can be specified based on reception of a request from this access destination in the information processing apparatus 111. For example, when a table of correspondence between the images 601 and the URIs is included in the information processing apparatus 111 in advance, specifying a URI used in making an access from the shooting apparatus 101 can specify an image 601 associated with this URI.

In a case where the shooting apparatus 101 has received setting information from the information processing apparatus 111 with which it has communicated via the URI of the access destination (YES of step S808), it performs setting of itself with use of this setting information (step S809). Before performing setting, the shooting apparatus 101 can confirm with the user whether to perform setting. In this case, the shooting apparatus 101 can perform setting of itself on the basis of acceptance of a user input indicating that setting is to be performed with use of this setting information. On the other hand, in a case where there has been no user input indicating that setting is to be performed with use of this setting information, the shooting apparatus 101 can end processing without performing setting with use of this setting information. Furthermore, in a case where the shooting apparatus 101 has not received setting information from the information processing apparatus 111 with which it has communicated via the URI of the access destination (NO of step S808), it can display an error on the LCD 208.

Note that although the above description has been provided using an example in which a predetermined URI for obtaining setting information is specified as a result of the shooting apparatus 101 reading the two-dimensional code 602, a method in which the shooting apparatus 101 specifies the predetermined URI is not limited to this. For example, the shooting apparatus 101 can specify the predetermined URI by reading a one-dimensional code, character recognition, and the like. Also, the shooting apparatus 101 can specify a URI as a result of the user directly inputting the URI via the input unit 202. Furthermore, the shooting apparatus 101 can obtain a URI with use of short-distance wireless communication. For example, information of a URI can be communicated between the shooting apparatus 101 and the printed material 141 by bringing the shooting apparatus 101 close to the printed material 141 so that communication can be performed therebetween via short-distance wireless communication. Short-distance wireless communication can be near field communication (NFC). Furthermore, short-distance wireless communication may be other than NFC; for example, it can be, but is not limited to, Bluetooth^{®}, Zigbee, a wireless tag, and the like. Any method that enables reading from the printed material with use of a unit included in the shooting apparatus 101 can be used as a method in which the shooting apparatus 101 specifies an access destination for obtaining setting information.

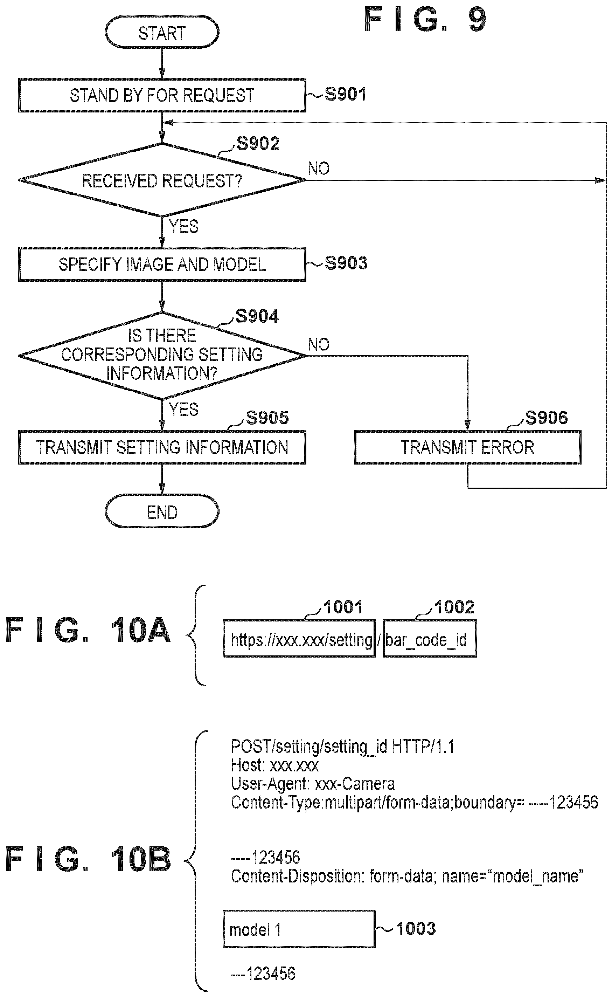

FIG. 9 shows an example of a processing flow that is executed by the information processing apparatus 111 according to the present embodiment in a case where a request for provision of setting information has been received from the shooting apparatus 101. First, the information processing apparatus 111 stands by for a request for provision of setting information from the shooting apparatus 101 (NO of steps S901 and S902). In a case where a request has been received (YES of step S902), the information processing apparatus 111 specifies a model of the shooting apparatus 101 that is a request source and an image 601 (step S903). For example, the information processing apparatus 111 can specify the model of the shooting apparatus 101 on the basis of information which is included in the request and which can specify the model of the shooting apparatus 101. Also, the information processing apparatus 111 can specify the image 601 on the basis of information which is included in the request and which can specify the image 601. Note that in a case where respective images 601 and models, or combinations thereof, are assigned different access destinations for obtaining setting information, the information processing apparatus 111 can specify the image 601 and the model by specifying the access destination used by the shooting apparatus 101.

The information processing apparatus 111 determines whether it includes setting information corresponding to the combination of the specified image 601 and model (step S904). For example, in a case where the storage unit 204 holds combinations of an image 601 and a model in association with setting information pieces, the information processing apparatus 111 can specify the corresponding setting information by searching for the setting information on the basis of the combination of the image 601 and the model. At this time, in a case where the setting information corresponding to the combination of the specified image 601 and model has not been specified, the information processing apparatus 111 can determine that it does not include the setting information corresponding to this combination of the image 601 and the model.

In a case where the information processing apparatus 111 includes the setting information corresponding to the combination of the specified image 601 and model (YES of step S904), it transmits this setting information to the shooting apparatus 101 (step S905). On the other hand, in a case where the information processing apparatus 111 does not include the setting information corresponding to the combination of the specified image 601 and model (NO of step S904), it can notify the shooting apparatus 101 of an error (step S906).

FIG. 10A shows an example of a URI obtained in a case where the shooting apparatus 101 has read the two-dimensional code 602. For example, the URI can include a first portion that is common to all images 601, and a second portion that varies with each image. For example, the first portion can be "https://xxx.xxx/setting" (1001) in FIG. 10A. Also, the second portion can be "bar_code_id" (1002) in FIG. 10B. As the second portion varies with each image 601, the information processing apparatus 111 can uniquely specify setting information corresponding to the image 601. The second portion can be referred to as a shooting setting indicator.

FIG. 10B shows an example of a message used when the shooting apparatus 101 request the information processing apparatus 111 to provide setting information. Although FIG. 10B shows an example that uses an HTTP request message in a Multipart/form-data format, the format of the message used when the shooting apparatus 101 requests the information processing apparatus 111 to provide setting information is not limited to this. The example of FIG. 10B represents an example in which a notification of information that specifies the model of the shooting apparatus 101, namely "model 1" (1003), is provided as a value of "model_name". The shooting apparatus 101 can notify the information processing apparatus 111 of the model of itself with use of this information. By obtaining this information, the information processing apparatus 111 can recognize the model of the shooting apparatus 101 that has made the request. Note that although this example represents an example in which a notification of information that can specify the model of the shooting apparatus 101 is provided using a body portion of the message, the notification of this information may be provided using a header portion of the message. Furthermore, the information that can specify the model may be a model name, or may be identification information that uniquely represents the model. The identification information that uniquely indicates the model can be referred to as a model indicator. In order to notify the information processing apparatus 111 of the model of the shooting apparatus 101, the shooting apparatus 101 can use any message format and any representation method.

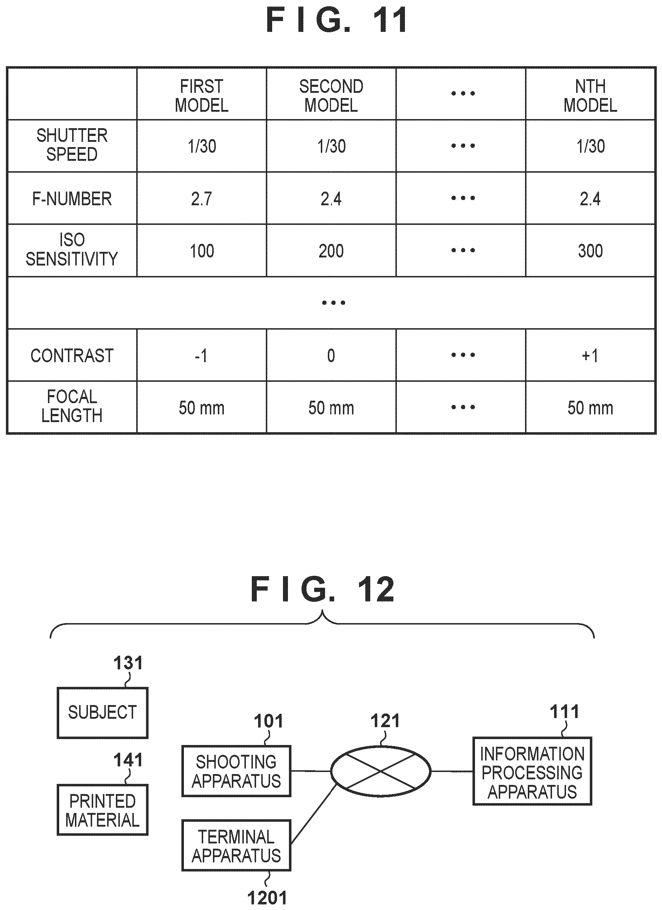

FIG. 11 shows an example of setting information held in the information processing apparatus 111. The example of FIG. 11 represents an example in which, for each of a plurality of setting items, different values are held for different models in association therewith in connection with one predetermined image 601. The setting items of the setting information held in the information processing apparatus 111 can include a shutter speed, an f-number, an ISO sensitivity, contrast, a focal length, and the like. The setting value of each setting item may be the same for each model, or may vary with each model. For example, in FIG. 11, the setting values of the shutter speed and the focal length are the same for the first model to the N^{th} model. On the other hand, the setting values of the ISO sensitivity and contrast differ among the first model to the N^{th} model. Also, the setting value of the f-number is the same for the first model and the N^{th} model, and is different from that for the second model. The setting information held in the information processing apparatus 111 may include setting items other than these, and may not include a part or an entirety of these setting items. The setting items that can be set and the setting values that can be set may vary with each model. The setting information held in the information processing apparatus 111 can include setting values of any setting items that can be set in order for the shooting apparatus to perform shooting. The information processing apparatus 111 can accept a change or an addition to the setting information. In a case where a change or an addition to the setting information has been accepted, the information processing apparatus 111 updates the held setting information with the accepted setting information. For example, in a case where the information processing apparatus 111 has accepted setting information for a new model, it can add an area for holding the setting information associated with this model to a table, and hold setting values corresponding to the respective setting items. Also, in a case where setting values related to a specific model or specific setting items are intended to be private, the information processing apparatus 111 can delete the setting values of the model or the setting items that are intended to be private from the table. Note that the information processing apparatus 111 may refrain from providing the setting values of the model or the setting items that are intended to be private in response to a request, while holding these setting values in the table. Furthermore, in a case where the information processing apparatus 111 has accepted a request for setting information corresponding to a model that is not held in the table, it may notify a request source of an error, or may provide the request source with setting information of a model registered as a default. With regard to a setting item which exists in a model notified through a request and which does not exist in a model registered as a default, a default setting value set on this model can be used. Note that the information processing apparatus 111 may hold the aforementioned setting information therein, or may obtain and provide setting information held in an external storage apparatus in response to a request.

### (Modification Example)

The above description has been provided using an example in which the shooting apparatus 101 obtains a URI for accessing the information processing apparatus 111 by reading the two-dimensional code 602 included in the printed material 141. Information for obtaining setting information included in the printed material 141 is not limited to being indicated by the two-dimensional code, and may be indicated by another method. For example, information for obtaining setting information may be embedded as an electronic watermark in an image 601. At this time, there are cases where the shooting apparatus 101 cannot read this information. If the shooting apparatus 101 cannot obtain the information indicated by the electronic watermark from the image 601, the shooting apparatus 101 cannot specify, for example, an access destination for obtaining setting information. In view of this, in the present modification example, the information embedded in the image 601 included in the printed material 141 is read by a terminal apparatus 1201 in place of the shooting apparatus 101; in this way, information intended for the shooting apparatus 101 to obtain setting information is provided. FIG. 12 shows an example of an information processing system used in the description of the present modification example. In FIG. 12, components that are the same as those of FIG. 1 are given the same reference numerals, and a description thereof is omitted. That is to say, the information processing system in FIG. 12 can be configured by adding the terminal apparatus 1201 to the configuration of the information processing system in FIG. 1. The terminal apparatus 1201 is connected to the network 121, and can communicate with the information processing apparatus 111.

The terminal apparatus 1201 provides the shooting apparatus 101 with information related to setting information. For example, the terminal apparatus 1201 can be a smartphone with a camera function. The terminal apparatus 1201 is not limited to this, and can be any apparatus having a camera function, such as a mobile telephone with a camera function, a tablet with a camera function, a personal computer (PC) with a camera function, and the like. A hardware configuration of the terminal apparatus 1201 can be similar to that of the shooting apparatus 101 shown in FIG. 2. That is to say, the terminal apparatus 1201 can include a control unit 201, an input unit 202, an output unit 203, a storage unit 204, an image sensor 205, a communication control unit 206, a GPS 207, and an LCD 208.

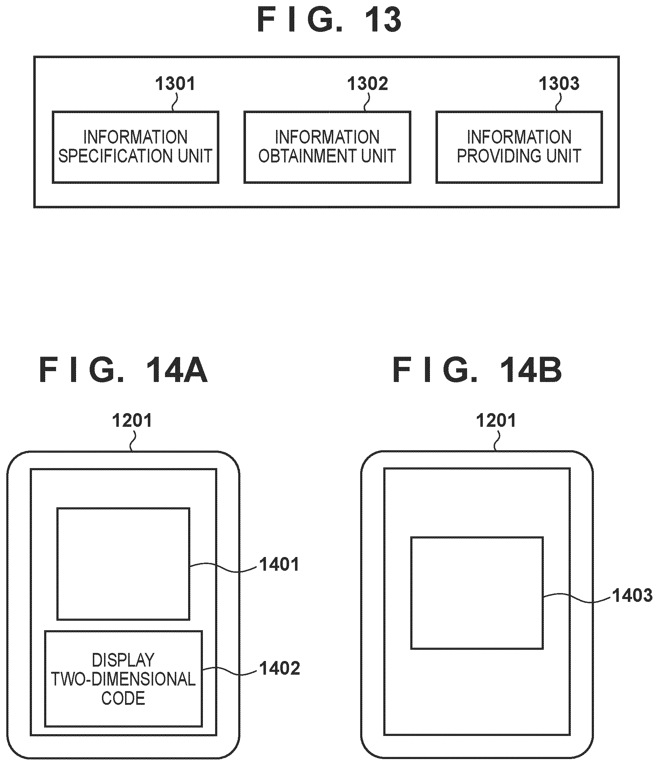

FIG. 13 shows a functional configuration of the terminal apparatus 1201. The terminal apparatus 1201 can be composed of an information specification unit 1301, an information obtainment unit 1302, and an information providing unit 1303. The information specification unit 1301 specifies first information through reading of a predetermined printed material 141. For example, the first information can be information indicating an access destination for obtaining setting information. Also, the first information may be information that can specify an image 601. The information obtainment unit 1302 obtains second information on the basis of the first information specified by the information specification unit 1301. The second information can be information that enables the shooting apparatus 101 to obtain setting information. For example, the second information can be information indicating an access destination for obtaining setting information. Furthermore, the second information may be setting information itself. The information providing unit 1303 provides the second information to the shooting apparatus 101. For example, the information providing unit 1303 can provide the second information by displaying the second information on the LCD 208 of the terminal apparatus 1201. Also, the information providing unit 1303 can provide the second information to the shooting apparatus 101 by communicating with the shooting apparatus 101 via the communication control unit 206.

An operation of the terminal apparatus 1201 will be described. FIG. 14A and FIG. 14B show an example of an operation of the terminal apparatus 1201. FIG. 14A shows an exemplary display on the terminal apparatus 1201 when the terminal apparatus 1201 reads specific information (the first information) from an image 601. FIG. 14B shows an exemplary display of the second information that is displayed on a screen of the terminal apparatus 1201 on the basis of the first information that the terminal apparatus 1201 has read from the image 601. The first information can be, for example, information indicated by an electronic watermark and the like embedded in the image 601. The second information can be, for example, a two-dimensional code and the like that can be read by the shooting apparatus 101. This operation can be started as a result of, for example, activating a specific application installed in the terminal apparatus 1201. The specific application can be, for example, an application having a function for assisting setting of the shooting apparatus 101. Once the terminal apparatus 1201 has started the operation, it reads an input image via the image sensor 205 of itself. The input image can be displayed in an area 1401 on the screen. The terminal apparatus 1201 determines whether specific first information is embedded by analyzing the input image. The first information can be, for example, information indicating information of an access destination for obtaining setting information. The first information is not limited to this, and may be, for example, information that identifies the image 601. For example, the terminal apparatus 1201 can obtain the first information embedded in the image 601 by executing image processing, such as predetermined filtering processing and predetermined pattern matching processing, and image analysis with respect to the read image. An image processing method and an image analysis method intended for the terminal apparatus 1201 to obtain the first information from an image are not limited to these, and any image processing method and image analysis method can be used.

Upon detecting that the first information is embedded in the image 601, the terminal apparatus 1201 obtains the second information on the basis of this first information. For example, when the first information is information indicating an access destination for obtaining setting information, the terminal apparatus 1201 can display, on the screen, the second information obtained by converting this information so that this information can be read by the shooting apparatus 101. For example, the second information can be a two-dimensional code. Upon detecting the first information, for example, the terminal apparatus 1201 can display the detection of the first information with use of an area 1402 on the screen. For example, the terminal apparatus 1201 can notify a user of the detection of the first information by displaying such characters as "display two-dimensional code" in the area 1402. Note that a method in which the terminal apparatus 1201 notifies the user of the detection of the first information is not limited to this; for example, the detection of the first information may be indicated in the area 1401. In such cases, the area 1402 can be used as an area that accepts an input from the user. For example, the terminal apparatus 1201 can obtain the second information on the basis of a user input that has been performed with respect to the display indicating the detection of the first information, and display the obtained second information on the screen. For example, the second information can be displayed in an area 1403 of FIG. 14B. When the shooting apparatus 101 has read the second information displayed in the area 1403, the shooting apparatus 101 can obtain setting information from the information processing apparatus 111.

The terminal apparatus 1201 can obtain the second information from another apparatus. For example, in a case where the first information is information indicating an access destination for obtaining setting information, the terminal apparatus 1201 can access the access destination indicated by the first information and obtain the second information from the information processing apparatus 111. In this case, for example, information indicating the model of the shooting apparatus 101 to be set can be set on the terminal apparatus 1201 in advance. Then, the terminal apparatus 1201 can notify the information processing apparatus 111 of the read image 601 and the information indicating the model of the shooting apparatus 101, and obtain the second information from the information processing apparatus 111. When requested to provide second information by the terminal apparatus 1201, the information processing apparatus 111 generates second information corresponding to the combination of the model of the shooting apparatus 101 to be set and the image 601, and notifies the terminal apparatus 1201 of the second information. The second information can be information indicating an access destination to be accessed by the shooting apparatus 101 to obtain setting information. With this configuration, even in a case where the terminal apparatus 1201 does not have a function of generating the second information, the shooting apparatus 101 can be provided with information indicating an access destination for obtaining setting information. Note that the information processing apparatus 111 may generate, in advance, second information pieces indicating access destinations for the respective combinations of a model and an image 601, and hold the second information pieces. With this configuration, the information processing apparatus 111 need not generate second information each time it receives a request. An apparatus accessed by the terminal apparatus 1201 to obtain second information may not be the information processing apparatus 111. For example, the terminal apparatus 1201 may obtain second information from another information processing apparatus.

Note that information that the terminal apparatus 1201 obtains from another apparatus may be setting information itself. For example, when the terminal apparatus 1201 has obtained first information, it can notify the information processing apparatus 111 of information that can specify the combination of the model of the shooting apparatus 101 and the image 601, and obtain setting information corresponding to this combination from the information processing apparatus 111, similarly to the foregoing description. In this case, the terminal apparatus 1201 can generate information that can be read by the shooting apparatus 101 as second information with use of the obtained setting information, and display the second information on the screen. The shooting apparatus 101 can obtain setting information by reading the second information displayed on the screen of the terminal apparatus 1201. Also, the terminal apparatus 1201 may provide setting information to the shooting apparatus 101 with use of another method. For example, in a case where the terminal apparatus 1201 can communicate with the shooting apparatus 101 with use of such communication methods as NFC and Bluetooth, the terminal apparatus 1201 can provide setting information to the shooting apparatus 101 with use of such communication methods.

In a case where the terminal apparatus 1201 knows an access destination of the information processing apparatus 111 for obtaining setting information, the terminal apparatus 1201 can obtain second information and setting information itself with use of this access destination. For example, in a case where an access destination for obtaining setting information has been set in advance on an application that operates on the terminal apparatus 1201 and the application obtains identification information that identifies an image 601 as first information, the terminal apparatus 1201 can notify the access destination of this identification information. In this way, in a case where a common access destination for obtaining setting information is provided and corresponding second information and setting information can be obtained by making notification of information that can specify identification information of an image 601 and a model, the information amount of information to be embedded in the image 601 can be reduced.

Meanwhile, the terminal apparatus 1201 can locally generate second information on the basis of first information. For example, in a case where first information includes information indicating an access destination for obtaining setting information, the terminal apparatus 1201 can generate second information that can be read by the shooting apparatus 101 with use of this first information, and display the first information on the screen. In this case, the second information can be information indicating an access destination for obtaining setting information. With this configuration, the terminal apparatus 1201 can provide the second information to the shooting apparatus 101 without communication with another apparatus, such as the information processing apparatus 111.

Although the above description has been provided using a configuration in which the terminal apparatus 1201 has both a function of reading first information from an image 601 and a function of providing second information to the shooting apparatus 101, it is permissible to adopt a configuration in which a plurality of different apparatuses have these functions, respectively. For example, a reader apparatus may read first information from an image 601, and an apparatus that is different from the reader apparatus and includes a display unit, such as a PC, may receive the first information from the reader apparatus, obtain second information from this first information, and display the second information on the display unit.

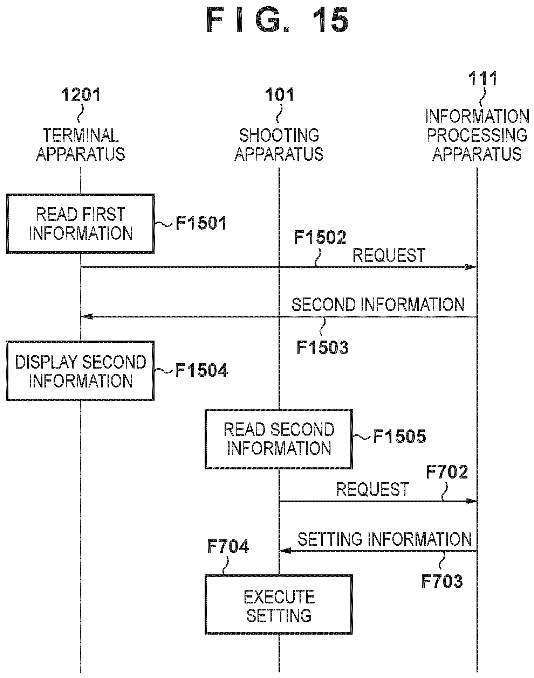

FIG. 15 shows an example of a sequence of messages that are exchanged among the terminal apparatus 1201, the shooting apparatus 101, and the information processing apparatus 111. In this example, first information includes information indicating an access destination for obtaining setting information, and the terminal apparatus 1201 obtains second information by accessing this access destination and displays the second information on the screen. It is assumed that the second information is information which indicates an access destination for obtaining setting information, and which can be read by the shooting apparatus 101. This sequence is started as a result of, for example, activating a specific application installed in the terminal apparatus 1201. Once the terminal apparatus 1201 has started to operate, it reads an input image via the image sensor 205 of itself. For example, the terminal apparatus 1201 reads the image 601 on the printed material 141, and determines whether first information is embedded. Upon detecting the first information, the terminal apparatus 1201 reads this first information (F1501). The terminal apparatus 1201 can display the detection of the first information on the LCD 208, and accept a user input as to whether second information is to be displayed. For example, the terminal apparatus 1201 can access the information processing apparatus 111 on the basis of the acceptance of the user input indicating that the second information is to be displayed.

The terminal apparatus 1201 accesses the information processing apparatus 111 via the access destination specified based on the first information. For example, the terminal apparatus 1201 can access the information processing apparatus 111 by accessing a URI indicated by the first information. When accessing the information processing apparatus 111, the terminal apparatus 1201 can notify the information processing apparatus of information that specifies the model of the shooting apparatus 101 and the image 601, and make a request for the second information (F1502). Based on reception of the request for provision of the second information from the terminal apparatus 1201, the information processing apparatus 111 can provide the terminal apparatus 1201 with the second information corresponding to the model and the image 601 of which it has been notified (F1503). The terminal apparatus 1201 displays the obtained second information on the screen (F1504).

The shooting apparatus 101 reads the second information displayed on the screen of the terminal apparatus 1201 with use of the image sensor 205 of itself (F1505). Reading of the second information by the shooting apparatus 101 can be executed similarly to reading of the two-dimensional code 602 in F701 of FIG. 7. Furthermore, the shooting apparatus 101 accesses the information processing apparatus 111 with use of the read second information. As an operation of setting of the shooting apparatus 101 based on the messages exchanged between the shooting apparatus 101 and the information processing apparatus 111 is similar to processing of F702 to F704 of FIG. 7, a description thereof is omitted.

As described above, according to the present embodiment, the shooting apparatus 101 specifies an access destination for obtaining predetermined setting information on the basis of reading of a predetermined printed material including a predetermined image, and obtains the predetermined setting information by communicating with an information processing apparatus via this access destination. Then, the shooting apparatus 101 performs setting of itself with use of the obtained setting information. With this configuration, even if an addition or a change has been made to setting information to be provided to the shooting apparatus, setting information set on the shooting apparatus 101 can be updated by making an addition or a change to setting information held in the information processing apparatus. Consequently, for example, even in a case where a new model has been manufactured and released for sale, setting information corresponding to this model can be provided without requiring re-printing of a printed material. Also, the terminal apparatus 1201 can read a predetermined printed material in place of the shooting apparatus 101, and the shooting apparatus 101 can provide information for obtaining setting information. With this configuration, setting information can be provided even in a case where a specific model of the shooting apparatus 101 cannot read information included in the predetermined printed material. In this way, the information processing apparatus can provide setting information to a larger number of models. Furthermore, providing setting information via the terminal apparatus 1201 also makes it possible to provide the setting information with use of a communication function and the like included in the shooting apparatus 101.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A shooting apparatus (101) including an image capturing means (401), the shooting apparatus (101) comprising:
a specification means (402) configured to, based on reading of a predetermined printed material including at least a predetermined image obtained through shooting performed by another shooting apparatus, specify an access destination associated with an information processing apparatus (111) to be accessed to obtain predetermined setting information associated with a setting used by the other shooting apparatus in the shooting;
an obtainment means (403) configured to obtain the predetermined setting information through communication with the information processing apparatus (111) via the access destination; and
a setting means configured to set the image capturing means (401) with use of the predetermined setting information.

2. The shooting apparatus according to claim 1, wherein
first information associated with information indicating the access destination is printed on the predetermined printed material separately from the predetermined image,
the image capturing means reads the first information printed on the printed material, and
the specification means specifies the access destination with use of the first information read by the image capturing means.

3. The shooting apparatus according to claim 2, wherein
the first information is a QR code.

4. The shooting apparatus according to claim 1, wherein
second information for obtaining the predetermined setting information from the information processing apparatus is embedded in the predetermined image on the predetermined printed material,
the image capturing means reads the second information embedded in the predetermined image, and
the specification means specifies the access destination with use of the second information read by the image capturing means.

5. The shooting apparatus according to claim 1, wherein
second information for obtaining the predetermined setting information from the information processing apparatus is embedded in the predetermined image on the predetermined printed material,
the second information is read by a predetermined terminal apparatus from the predetermined image on the predetermined printed material, and
the specification means specifies the access destination by obtaining information indicating the access destination specified based on the second information read by the predetermined terminal apparatus.

6. The shooting apparatus according to claim 1, wherein
the information processing apparatus holds pieces of the predetermined setting information that respectively correspond to models of one or more shooting apparatuses, and
the obtainment means notifies the information processing apparatus of information that specifies a model of the shooting apparatus, and obtains the predetermined setting information corresponding to the model from the information processing apparatus.

7. The shooting apparatus according to claim 1, wherein
one or more of the access destination are provided in correspondence with one or more images, respectively, and
the specification means specifies the access destination corresponding to the predetermined image on a basis of reading of the predetermined printed material.

8. The shooting apparatus according to claims 1, wherein
the obtainment means obtains the predetermined setting information corresponding to the predetermined image specified by specification information by notifying the information processing apparatus of the specification information for specifying the predetermined image.

9. An information processing apparatus (111) that provides a shooting apparatus (101) including an image capturing means (401) with setting information used in setting of the image capturing means (401), the information processing apparatus (111) comprising:
a holding means (501) configured to hold predetermined setting information associated with a setting used by another shooting apparatus in shooting for obtaining a predetermined image included in a predetermined printed material;
an acceptance means (502) configured to accept, from the shooting apparatus (101), a request that demands provision of the predetermined setting information via a predetermined access destination specified based on reading of the predetermined printed material; and
a providing means (503) configured to provide the predetermined setting information in response to the request.

10. A terminal apparatus (1201) that provides a shooting apparatus (101) including an image capturing means (401) with information related to setting information used in setting of the image capturing means (401), the terminal apparatus (1201) comprising:
a specification means (1301) configured to specify first information by reading a predetermined printed material including at least a predetermined image, the first information being for obtaining predetermined setting information associated with a setting used by another shooting apparatus in shooting for obtaining the predetermined image;
an obtainment means (1302) configured to, based on the first information, obtain second information for enabling the shooting apparatus (101) to obtain the predetermined setting information; and
a providing means (1303) configured to provide the second information to the shooting apparatus (101).

11. A control method executed by a shooting apparatus (101) including an image capturing means (401), the control method comprising:
specifying, based on reading of a predetermined printed material including at least a predetermined image obtained through shooting performed by another shooting apparatus, an access destination associated with an information processing apparatus (111) to be accessed to obtain predetermined setting information associated with a setting used by the other shooting apparatus in the shooting;
obtaining the predetermined setting information through communication with the information processing apparatus (111) via the access destination; and
setting the image capturing means (401) with use of the predetermined setting information.

12. A control method executed by an information processing apparatus (111) that provides a shooting apparatus (101) including an image capturing means (401) with setting information used in setting of the image capturing means (401), the control method comprising:
holding predetermined setting information associated with a setting used by another shooting apparatus in shooting for obtaining a predetermined image included in a predetermined printed material;
accepting, from the shooting apparatus (101), a request that demands provision of the predetermined setting information via a predetermined access destination specified based on reading of the predetermined printed material; and
providing the predetermined setting information in response to the request.

13. A control method executed by a terminal apparatus (1201) that provides a shooting apparatus (101) including an image capturing means (401) with information related to setting information used in setting of the image capturing means (401), the control method comprising:
specifying first information by reading a predetermined printed material including at least a predetermined image, the first information being for obtaining predetermined setting information associated with a setting used by another shooting apparatus in shooting for obtaining the predetermined image;
obtaining, based on the first information, second information for enabling the shooting apparatus (101) to obtain the predetermined setting information; and
providing the second information to the shooting apparatus (101).

14. A computer program comprising instructions which, when the program is executed by a computer in the shooting apparatus (101), cause the computer to carry out the method of claim 11.

15. A computer program comprising instructions which, when the program is executed by a computer in the information processing apparatus (111), cause the computer to carry out the method of claim 12.

16. A computer program comprising instructions which, when the program is executed by a computer in the terminal apparatus (1201), cause the computer to carry out the method of claim 13.
